(19) Europäisches Patentamt
European Patent Office
Office européen des brevets

(11) **EP 1 615 397 B1**

(12) **FASCICULE DE BREVET EUROPEEN**

(45) Date de publication et mention
de la délivrance du brevet:
**17.10.2007 Bulletin 2007/42**

(51) Int Cl.:
***H04L 12/56*** *(2006.01)*

(21) Numéro de dépôt: **05102866.0**

(22) Date de dépôt: **12.04.2005**

(54) **Dispositif de répartition de charge, multi-critères, pour un équipement périphérique d'un réseau de communications à commutation d'étiquettes**

Vorrichtung zu einer Multikriterien Lastverteilung für ein Peripheriegerät in einem etikettenvermittelten Netz

Device to distribute the load using multiple criteria for a peripheral equipment of a label switched network

(84) Etats contractants désignés:
**AT BE BG CH CY CZ DE DK EE ES FI FR GB GR HU IE IS IT LI LT LU MC NL PL PT RO SE SI SK TR**

(30) Priorité: **29.04.2004 FR 0450821**

(43) Date de publication de la demande:
**11.01.2006 Bulletin 2006/02**

(73) Titulaire: **Alcatel Lucent**
**75008 Paris (FR)**

(72) Inventeur: **RANDRIAMASY, Claire-Sabine**
**92190, MEUDON (FR)**

(74) Mandataire: **Korakis-Ménager, Sophie et al**
**Alcatel Lucent**
**Intellectual Property & Standards**
**54 rue La Boétie**
**75008 Paris (FR)**

(56) Documents cités:
**EP-A- 1 328 095**

• **ORINCSAY D ET AL: "Prompt partial path optimization in MPLS networks" COMPUTER NETWORKS, ELSEVIER SCIENCE PUBLISHERS B.V., AMSTERDAM, NL, vol. 43, no. 5, 5 décembre 2003 (2003-12-05), pages 557-572, XP004468344 ISSN: 1389-1286**

**Description**

L'invention concerne le domaine des réseaux à commutation d'étiquettes, et plus particulièrement les dispositifs de répartition de charge (ou trafic) utilisés dans de tels réseaux.

Comme de nombreux réseaux de communications, un réseau dit « à commutation d'étiquettes » (ou « label switched network »), par exemple de type MPLS ou GMPLS, peut être schématiquement résumé à une multiplicité d'équipements de commutation raccordés les uns aux autres et constituant des noeuds destinés à router des paquets de données, ou plus généralement des flux de données, entre des terminaux de communication ou des serveurs qui leurs sont couplés. Dans un réseau à commutation d'étiquettes, les équipements de commutation sont appelés routeurs de commutation d'étiquettes (ou LSRs pour « Label Switched Routers »).

Les LSRs désignent deux types de routeur ou commutateur couplés entre eux : les routeurs périphériques (ou LERs pour « Label Edge Routers »), chargés d'établir un chemin de commutation d'étiquettes (ou LSP pour « Label Switched Path ») pour chaque flux de données qu'ils reçoivent lorsque le gestionnaire du réseau le leur demande, et les routeurs de coeur (ou LCRs pour « Label Core Routers »), uniquement chargés de la commutation des flux de données et de la transmission des données d'information du réseau.

L'établissement d'un chemin de commutation consiste à adjoindre aux données d'un flux une étiquette associée au chemin à suivre et à réserver les ressources nécessaires à l'acheminement du flux, depuis le noeud source (LER) jusqu'au noeud de destination (LER), compte tenu du type de service (ou ToS pour « Type of Service ») et/ou de la qualité de service (ou QoS pour « Quality of Service ») qui est (sont) associé(s) à ce flux. Afin que chaque LER source puisse établir un chemin, chaque flux doit être associé à un LER source et un LER de destination, à une classe d'équivalence de transmission (ou FEC pour « Forwarding Equivalence Class ») et à un ensemble de données de service définissant le type de service (ou ToS) et/ou la qualité de service (ou QoS).

Le calcul d'un chemin de commutation LSP s'effectue soit à partir de la détermination du chemin le plus court entre les noeuds de départ et de destination, soit à partir de l'énumération d'un ensemble de noeuds qu'il doit obligatoirement comporter.

A partir de la liste des noeuds produite par le calcul, un processus dit de signalisation établit le chemin de commutation après en avoir validé les étapes compte tenu de contraintes liées à la QoS et/ou ToS requise pour le flux.

Un chemin de commutation LSP peut être vu comme une séquence de liens établis entre des couples de LSRs voisins, commençant au niveau d'un LER source et se terminant au niveau d'un LER de destination. Un tel chemin est généralement calculé au moyen d'un logiciel de calcul de chemins de commutation LSPs, de manière à supporter un trafic choisi en fonction de critère (s), tels que la bande passante disponible, le nombre de sauts (ou de liens), le temps de transfert et le coût administratif.

Comme le sait l'homme de l'art, un lien qui est partagé par plusieurs chemins de commutation LSP, empruntés par des trafics différents, peut faire l'objet d'une surcharge, appelée congestion.

Afin de résorber ces congestions de lien, des dispositifs de répartition de charge (ou trafic) ont été proposés. Ils ont tous pour objectif de réduire le trafic sur un lien congestionné en répartissant une partie du trafic entre des chemins de commutation LSP alternatifs ayant les mêmes LER source et LER de destination que le lien congestionné, de manière à assurer une continuité de service.

Un premier dispositif de répartition de charge, appelé MPLS-OMP (pour « MPLS Optimized Multi-Path »), est une adaptation du dispositif OSPF-OMP aux réseaux MPLS, dans laquelle, d'une part, l'information de charge concerne tous les chemins de commutation LSP et non des liens seuls, et d'autre part, l'établissement d'un chemin de commutation LSP initial est basé sur un temps de transfert et les chemins de commutation LSP alternatifs sont générés par un algorithme de type SPF à partir de l'ensemble des liens non congestionnés. Si un seul chemin de commutation LSP alternatif est généré, aucune répartition de trafic (ou « load balancing ») n'est effectuée. Par ailleurs, la génération de chemins de commutation LSP alternatifs se fait par relaxation d'un unique critère d'optimisation, tel que la longueur du chemin. Plus précisément, tous les chemins de commutation LSP correspondant à un écart inférieur ou égal à deux, par rapport à l'unique critère, sont retenus. En outre, ce dispositif MPLS-OMP permet l'utilisation forcée d'un chemin de commutation LSP qui n'a pas été sélectionné par OSPF-OMP.

Ce dispositif MPLS-OMP présente au moins deux inconvénients : la sélection de chemin repose sur un unique critère, ce qui n'est pas optimal, et, bien qu'il rejette les chemins comportant des liens congestionnés, il ne sélectionne pas les chemins de commutation LSP alternatifs en prenant en considération leurs charges respectives.

Un second dispositif de répartition de charge, appelé MATE (pour « Multi-Path Adaptative Traffic Engineering »), met en oeuvre un algorithme de répartition de charge adaptatif et distribué, conçu pour tenter de remédier aux inconvénients précités du premier dispositif. Ce dispositif repose sur l'hypothèse que plusieurs chemins de commutation LSP sont déjà disponibles entre un LER source et un LER de destination donnés. Les liens congestionnés sont détectés au moyen d'un mécanisme de mesure actif consistant à transmettre périodiquement dans les deux sens des paquets sonde entre le LER source et le LER de destination afin de disposer du délai de transmission et du taux de perte. Le trafic est réparti entre des chemins de commutation LSP en optimisant une fonction de coût scalaire sous des contraintes représentatives du trafic total entrant par le LER source et sortant par le LER de destination et du débit de trafic en utilisant un chemin de commutation LSP donné. La fonction de coût prenant en considération des temps de transfert et des taux de perte marginaux, aucune synchronisation et aucune mesure directe de trafic ne sont nécessaires.

Ce dispositif MATE présente au moins trois inconvénients : l'utilisation de paquets sonde dans un réseau MPLS dense pour détecter les congestions LSP sont supposés avoir été calculés antérieurement compte tenu d'un critère à long terme, si bien que leurs performances ne sont pas forcément les meilleures possible lorsque le dispositif est déclenché et qu'ils peuvent comporter des liens devenus congestionnés dans l'intervalle, et aucun mécanisme de stabilisation de trafic (en terme de décalage progressif) n'est prévu.

Orincsay et al. in Computer Networks, Elsevier Science Publishers B.V., Vol. 43, n°5, pp 557-572, Amsterdam (2003), XP 00 44 68 344, décrivent des méthodes de répartition de charge pour réseaux MPLS.

Aucun dispositif connu n'étant entièrement satisfaisant, l'invention a donc pour but d'améliorer la situation.

Elle propose à cet effet un dispositif de répartition de charge, pour un réseau de communications à commutation d'étiquettes comportant un ensemble de noeuds périphériques de commutation d'étiquettes (ou LER).

Ce dispositif se caractérise par le fait qu'il comporte :

- des premiers moyens de traitement chargés de déterminer des chemins équivalents de commutation de flux de données étiquetés (ou LSP) entre un noeud périphérique source et chaque noeud périphérique de destination de l'ensemble, compte tenu d'une multiplicité de critères associés à des poids respectifs et d'une désignation des liens critiques au sein du réseau, les chemins de commutation équivalents étant classés en fonction de valeurs de coût associées, et

- des seconds moyens de traitement chargés de sélectionner parmi les chemins de commutation équivalents déterminés par les premiers moyens de traitement, un jeu de chemins de commutation équivalents et alternatifs à un chemin de commutation initial, établi entre un noeud périphérique source et un noeud périphérique de destination et comportant un lien critique, puis de déterminer une répartition entre les chemins de commutation équivalents et alternatifs de ce jeu, en fonction de leurs valeurs de coût respectives, d'un trafic devant emprunter ledit chemin de commutation initial.

Le dispositif selon l'invention peut comporter d'autres caractéristiques complémentaires qui peuvent être prises séparément et/ou en combinaison, et notamment :

- les critères utilisés par les premiers moyens de traitement peuvent être la bande passante disponible, le nombre de sauts, le temps de transfert et/ou bande passante disponible, le nombre de sauts, le temps de transfert et/ou le coût administratif,

- ses premiers moyens de traitement peuvent être agencés de manière à fonctionner en mode préventif. Dans ce cas, ils déterminent les chemins de commutation équivalents lorsqu'ils reçoivent des instructions du réseau comportant les critères et leurs poids respectifs ainsi que les désignations de lien(s) critique(s) (éventuellement sous la forme de leurs coûts administratifs). Un lien critique peut alors être soit un lien congestionné, soit un lien que le gestionnaire du réseau veut éviter d'utiliser,

- ses premiers moyens de traitement peuvent être agencés de manière à fonctionner en mode réactif. Dans ce cas, ils déterminent les chemins de commutation équivalents lorsqu'ils reçoivent des informations désignant au moins un lien critique congestionné au sein du réseau. Ces informations peuvent par exemple provenir de moyens de détection du dispositif chargés de détecter les liens critiques congestionnés. Par ailleurs, les premiers moyens de traitement sont de préférence agencés de manière à déterminer les chemins de commutation équivalents après avoir modifiés les poids associés aux critères. Pour ce faire, les premiers moyens de traitement peuvent par exemple augmenter le poids qui est associé au critère de bande passante, puis ajuster les poids des autres critères en fonction de cette augmentation, de sorte que la somme des poids des critères utilisés soit égale à 1 et que les proportions entre les poids soient respectées,

- ses premiers moyens de traitement déterminent préférentiellement les chemins de commutation équivalents à partir de valeurs mises à jour des bandes passantes des liens et de la topologie en cours du réseau, en particulier dans le mode de fonctionnement préventif,

- ses seconds moyens de traitement peuvent être agencés de manière à, d'une part, soumettre à une fonction de hachage dynamique les flux de données, reçus par le noeud périphérique source et définis par des paramètres de source réseau, de destination réseau, de port source et de port de destination, afin de délivrer un nombre choisi de cases (ou « bins ») de valeurs, et d'autre part, affecter les cases de valeurs, représentatives des flux de données reçus, aux chemins de commutation équivalents et alternatifs du jeu en fonction de leurs valeurs de coût respectives. Dans ce cas, les seconds moyens de traitement peuvent être chargés d'affecter les flux de données reçus, pendant un intervalle de temps choisi et selon un décalage de flux incrémental, à chacun des chemins de commutation équivalents et alternatifs du jeu, le décalage de flux sur l'un des chemins étant interrompu lorsque la répartition de trafic associée, fonction de sa valeur de coût, est atteinte. Les seconds moyens de traitement procèdent alors préférentiellement au décalage de flux de façon progressive en fonction d'un rythme de décalage (ou « pace shifting ») choisi et/ou d'une vitesse de décalage choisie,

- ses seconds moyens de traitement peuvent être chargés de mettre à jour la table de routage d'un noeud périphérique source après avoir déterminé les chemins de commutation équivalents et alternatifs du jeu et la répartition de trafic,
- ses premiers et seconds moyens de traitement sont préférentiellement interfacés à un protocole de routage à état de lien à extension de type « TE », et en particulier de type « OSPF-TE ».

L'invention porte également sur un équipement périphérique de réseau, tel qu'un routeur de commutation d'étiquettes, définissant un noeud périphérique pour un réseau de communications à commutation d'étiquettes et comprenant un dispositif de répartition de charge du type de celui présenté ci-avant.

Par ailleurs, l'invention est particulièrement bien adaptée aux réseaux de communications à commutation d'étiquettes de type MPLS (« MultiProtocol Label Switching ») qui traite des flux constitués de paquets ou cellules de données asynchrones, ou GMPLS (« Generalized MPLS ») qui traite des flux constitués non seulement de paquets ou cellules de données asynchrones mais également de trames (ou « frames ») synchrones ou de flux de lumière (ou « light streams »).

D'autres caractéristiques et avantages de l'invention apparaîtront à l'examen de la description détaillée ci-après, et des dessins annexés, sur lesquels :

- la figure 1 illustre de façon schématique un exemple de réseau de communications à commutation d'étiquettes comportant une multiplicité de routeurs (ou noeuds) périphériques (LERs), équipés d'un dispositif de répartition de charge selon l'invention, et couplés entre eux par des routeurs (ou noeuds) de coeur (LCRs),
- la figure 2 illustre de façon schématique un exemple de réalisation d'un dispositif de répartition de charge selon l'invention, et
- la figure 3 illustre de façon schématique un exemple de décalage de trafic incrémental au moyen d'une fonction de hachage, dans le cas d'une répartition de trafic entre trois chemins LSP alternatifs.

Les dessins annexés pourront non seulement servir à compléter l'invention, mais aussi contribuer à sa définition, le cas échéant.

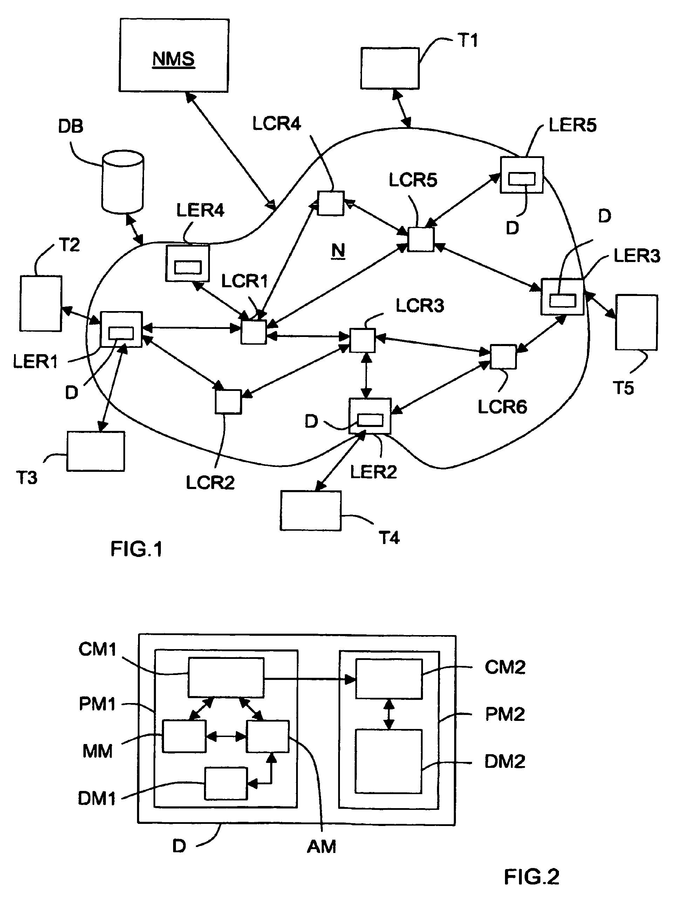

On se réfère tout d'abord à la figure 1 pour décrire un exemple non limitatif de réseau de communications à commutation d'étiquettes (ou « Label Switched Network ») comportant des équipements de réseau (LERn, LCRm) définissant des noeuds et pourvus chacun d'un dispositif de répartition de charge selon l'invention.

Dans ce qui suit, on considère que le réseau est de type IP MPLS (« Internet Protocol MultiProtocol Label Switching »). Mais bien entendu, l'invention n'est pas limitée à ce seul type de réseau à commutation d'étiquettes. Elle concerne d'une manière générale tous les types de réseau à commutation d'étiquettes, comme par exemple les réseaux de type IP GMPLS (« IP Generalized MultiProtocol Label Switching »).

Un réseau IP MPLS comporte généralement, une multiplicité de routeurs (ou noeuds) de commutation d'étiquettes (ou LSRs pour « Label Switched Routers ») couplés entre eux. Ces LSRs peuvent être regroupés en deux catégories : les routeurs périphériques (ou LERs pour « Label Edge Routers ») LERn (ici n = 1 à 5), et les routeurs de coeur (ou LCRs pour « Label Core Routers ») LCRm (ici m = 1 à 6). Comme on le verra plus loin, les routeurs LER sont chargés d'établir des chemins de commutation au sein du réseau tandis que les routeurs LCR sont chargés de la commutation.

Par ailleurs, dans ce qui suit on entend par « lien » une connexion entre deux routeurs LSR, et par « chemin (ou route) LSP » un trajet entre un routeur périphérique LER source et un routeur périphérique LER de destination, défini par une séquence de liens. En outre, le noeud (ou routeur) qui suit un autre noeud au sein d'un chemin LSP est généralement appelé « saut suivant » (ou « next hop »). Par conséquent, le nombre de sauts d'un chemin LSP définit sa longueur.

Un chemin LSP est généralement calculé de manière à optimiser la transmission de trafic entre un routeur périphérique LER source et un routeur périphérique LER de destination. Dans un réseau IP MPLS, chaque routeur périphérique LER est agencé, lorsqu'il constitue une source ($LER_S$), de manière à calculer le meilleur chemin LSP pour transférer les flux de données qu'il reçoit vers le routeur périphérique LER de destination ($LER_D$), compte tenu du service associé aux flux, de la topologie en cours du réseau et des charges en cours des liens.

Le réseau IP MPLS comporte généralement une base de données DB dans laquelle sont notamment stockées la topologie en cours du réseau et les charges en cours des liens. Les routeurs périphériques LER sont donc couplés à cette base de données DB, qui est préférentiellement de type TE-LSA (pour "Trafic Engineering - Link State Advertisement"), et avec laquelle ils communiquent selon un protocole de routage à état de lien à extension de type « TE » (ou « link state routing protocol - Traffic Engineering ») tel que « OSPF-TE ».

Le réseau IP MPLS comporte également un système de gestion de réseau ou NMS chargé de transmettre des données aux routeurs LSR et d'extraire des données de ces derniers afin de permettre la gestion du réseau par un administrateur (ou gestionnaire).

Il est important de noter que le routeur périphérique LER de destination d'un chemin LSP est le dernier routeur auquel est transmis un paquet étiqueté au sein d'une zone (ou domaine), mais pas l'adresse de destination dudit paquet étiqueté.

Une multiplicité de terminaux d'utilisateurs ou d'entreprises Ti (ici i = 1 à 5) sont susceptibles de se raccorder à certains au moins des LERs afin de pouvoir échanger des données entre eux.

Dans ce qui suit on considère que les terminaux Ti sont des stations mobiles, telles que des téléphones mobiles (ou cellulaires). Mais, il pourrait s'agir de tout type de terminal de communications capable d'échanger des données avec d'autres terminaux ou équipements de réseau, comme par exemple des téléphones fixes, des télécopieurs, des assistants numériques personnels (ou PDA pour « Personal Digital Assistant »), des ordinateurs fixes ou portables ou des serveurs de fournisseurs de contenus (ou ASP pour « Application Service Provider »).

L'invention est destinée à permettre la répartition de charge (ou trafic) au sein d'un réseau à commutation d'étiquettes (ici de type IP MPLS).

L'invention propose à cet effet d'implanter, de préférence dans chaque routeur périphérique LERn du réseau, un dispositif de répartition de charge (ou trafic) D.

Ce dispositif D est non seulement chargé de calculer les meilleurs chemins LSR pour transmettre des flux de données reçus jusqu'à un routeur LER de destination, mais également de résoudre (ou résorber) les congestions de liens au moyen d'un mécanisme de répartition de charge.

Une congestion de lien peut survenir pour les raisons suivantes :

- un problème technique sur un lien pouvant éventuellement entraîner une surcharge de(s) lien(s) voisin (s) et des modifications de la topologie du réseau,
- une surcharge de lien provoquée par une mauvaise prise en compte de sa charge et non par un problème technique, et
- une augmentation locale de la demande de trafic, sans problème technique, ce qui n'induit pas de modification de la topologie du réseau.

Dans le contexte IP MPLS selon l'invention, la répartition de charge est déclenchée en mode réactif dans chaque routeur périphérique LER source qui reçoit un trafic et qui est momentanément connecté à un routeur périphérique LER de destination via au moins un lien critique. Mais, en variante ou en complément, elle peut être également déclenchée en mode préventif afin d'obéir aux instructions de l'administrateur du réseau.

Le dispositif D selon l'invention, illustré sur la figure 2, comporte tout d'abord un premier module de traitement PM1 chargé de déterminer des chemins équivalents de commutation de flux de données étiquetés (ou chemins LSP) entre un routeur périphérique LER source et chaque routeur périphérique LER de destination du réseau (ou domaine) considéré, compte tenu d'une multiplicité de critères associés à des poids respectifs et d'une désignation des liens critiques au sein du réseau. Chaque chemin équivalent LSP est délivré avec une valeur de coût associée qui permet de définir son classement par rapport aux autres chemins équivalents LSP délivrés.

Ce premier module de traitement PM1 est préférentiellement celui qui est connu sous l'acronyme anglais MCLC (pour « Multi-Criteria LSP Calculation »), lequel est notamment décrit dans le document brevet portant le numéro de dépôt FR 02 15966 et dont le contenu est ici inclus par référence.

Dans la description qui suit, on considèrera que le premier module de traitement PM1 est un module MCLC. Ce dernier étant intégralement décrit dans le document brevet précité, il ne sera pas décrit en détail ci-après.

Il est simplement rappelé qu'un module MCLC utilise simultanément plusieurs critères associés à des poids relatifs (définissant un vecteur de coût), afin de déterminer les valeurs des liens et délivrer des chemins LSP présentant des performances équivalentes (c'est-à-dire paréto-optimales) pour chaque routeur périphérique LER de destination du réseau (ou domaine) considéré. Ces chemins LSP délivrés, appelés « chemins LSP équivalents », peuvent ainsi être classés selon une valeur de coût reposant sur la priorité (ou le poids relatif) de chaque critère choisi et l'écart par rapport à la plus forte valeur observée.

Les critères utilisés par un tel module MCLC sont préférentiellement choisis dans un groupe comprenant au moins la bande passante disponible, le nombre de sauts, le temps de transfert et le coût administratif. Le choix des critères et de leurs poids relatifs respectifs initiaux dépend de l'administrateur du réseau.

Par ailleurs, un tel module MCLC est préférentiellement interfacé à un protocole de routage à état de lien de type OSPF-TE.

Chaque dispositif D selon l'invention comporte également un second module de traitement PM2 couplé au premier module de traitement PM1 et chargé de la répartition dynamique de charge en mode réactif et/ou en mode préventif. Dans ce qui suit on considèrera que le dispositif D fonctionne à la fois en mode réactif et en mode préventif.

Tout comme le premier module de traitement PM1, le second module de traitement PM2 est préférentiellement interfacé à un protocole de routage à état de lien de type OSPF-TE.

Lorsqu'un routeur source LERn reçoit un flux de données à transmettre à un routeur de destination LERn', via un chemin LSP, dit initial, comportant au moins un lien critique (éventuellement congestionné), le second module de traitement PM2 de son dispositif D commence tout d'abord par sélectionner un jeu de K chemins LSP équivalents et alternatifs au chemin LSP initial, parmi les chemins LSP équivalents qui sont délivrés par le premier module de traitement PM1. Les K chemins LSP d'un jeu sont désignés ci-après $P_k$, où k = 1 à K.

Il est rappelé que le premier module de traitement PM1 délivre des chemins LSP équivalents partant de son routeur LER source et se terminant chacun au niveau de l'un des routeurs LER de destination du réseau (ou domaine) concerné.

Le second module de traitement PM2 détermine ensuite une répartition inégale du trafic devant emprunter le chemin LSP initial entre les chemins LSP équivalents et alternatifs $P_k$ du jeu, en fonction de leurs valeurs de coût respectives $M_k$.

Comme indiqué ci-avant, le dispositif D peut être déclenché soit en mode réactif, soit en mode préventif.

Dans le mode préventif, l'administrateur du réseau IP MPLS adresse au routeur LER source concerné, via le NMS et le réseau, des instructions comportant les critères et les poids relatifs associés devant être utilisés par le premier module PM1, et la désignation (ou l'identité) d'un ou plusieurs liens critiques, qui peut être représentée par un coût administratif. Bien entendu, d'autres paramètres précisant par exemple la date et/ou l'heure et/ou la durée pendant laquelle le dispositif D doit effectuer une répartition dynamique de charge peuvent être également transmis au routeur LER source concerné. Ce mode préventif sera détaillé plus loin.

Dans le mode réactif, le dispositif D est déclenché lorsqu'il reçoit la (ou les) désignation(s) (ou identité(s)) d'un ou plusieurs liens critiques dont la congestion a été détectée par un module de détection DM1 lors d'une vérification (TE-LSA) du contenu de la base de données DB. Un tel module de détection DM1 peut être soit un module externe raccordé au routeur LER source, soit un module interne au dispositif D, par exemple intégré dans le premier module de traitement PM1 comme illustré sur la figure 2.

Il est important de noter qu'en l'absence de congestion, le chemin LSP optimal peut être calculé soit par le premier module de traitement PM1 (module MCLC) dans son fonctionnement standard, soit par un autre module de calcul de chemins LSP que le premier module de traitement PM1. Cet autre module de calcul peut être par exemple de type Dijkstra. Mais, si le second module de traitement PM2 doit intervenir, le premier module de traitement PM1 doit être obligatoirement utilisé.

Lorsque le module de détection DM1 détecte une congestion pendant une phase de vérification (TE-LSA), il déclenche les premier PM1 et second PM2 modules de traitement. Plus précisément, le premier module de traitement PM1 comporte un module de gestion MM couplé au module de détection DM1 et chargé d'interrompre les temporisateurs contrôlant le calcul de chemins LSP réguliers afin de les remplacer par des compteurs de charge de lien, de temps écoulé et de variation de charge. Des compteurs de ce type sont par exemple décrits dans le document de C. Villamizar "OSPF Optimized multipath (OSPF-OMP)", IETF draft, draft-ietf_ospf-omp-03, january 2002.

Le premier module de traitement PM1 comporte un module d'adaptation AM couplé au module de gestion MM et chargé de déterminer un nouveau poids pour l'un au moins des critères utilisés en l'absence de congestion. Etant donné que la cause principale de congestion d'un lien est sa surcharge, c'est le poids $W_{BW}$ du critère de bande passante disponible qui est préférentiellement modifié, et plus précisément augmenté (à moins que l'administrateur du réseau ne refuse cette option). Les autres critères (réguliers) sont conservés (il s'agit généralement du temps de transfert théorique, de la longueur du chemin, de la charge et/ou du coût administratif).

Après avoir augmenté le poids relatif $w_{BW}$ du critère de bande passante disponible, à l'aide d'une formule prédéterminée, le module d'adaptation AM ajuste les poids respectifs $w_q$ (q ≠ WB) des autres critères (réguliers) de sorte que la somme totale de tous les poids relatifs soit égale à 1 et que les proportions prédéfinies entre les poids $w_q$ soient respectées.

On peut par exemple utiliser la formule suivante pour mettre à jour le poids relatif $w_{BW}$ du critère de bande passante disponible : $w_{BW}{}^+ = (1 - w_{BW})/R_B$, où $w_{BW}+$ est le poids mis à jour et $R_B$ est une valeur supérieure à 1, et de préférence supérieure ou égale à 2 par défaut, et représentative du rapport d'incrément de poids relatif du critère de bande passante.

Puis, un module de calcul CM1, du premier module de traitement PM1, calcule tous les chemins LSP équivalents $P_k$, pouvant être respectivement établis entre son routeur LER source ($LER_S$) et chacun des routeurs de destination $LER_D$ du réseau (ou domaine) concerné, et les valeurs de coût associées $M_k$, comme décrit dans le document brevet précité. Il utilise pour ce faire les critères et leurs nouveaux poids relatifs fournis par le module d'adaptation AM, ainsi que les informations provenant de la base de données DB (notamment celles concernant la topologie en cours du réseau, les charges en cours des liens et les liens congestionnés). Les chemins LSP équivalents $P_k$ peuvent ainsi être classés en fonction de leurs valeurs de coût associées $M_k$. Le meilleur chemin LSP est par exemple référencé $P_1$ et associé à la valeur de coût $M_1$ la meilleure ($M_1 \geq M_2 ... \geq M_k$, où $M_k$ est la pire des valeurs).

Le second module de traitement PM2 comporte un module de calcul CM2 chargé de réceptionner les définitions des K chemins LSP équivalents $P_k$, et les valeurs de coût $M_k$ associées, délivrées par le premier module de traitement PM1, afin de déterminer la répartition dynamique de charge.

Cette répartition dynamique de charge commence tout d'abord par une présélection parmi les K chemins LSP équivalents $P_k$ des chemins LSP équivalents qui ont en commun le routeur LER de destination ($LER_D$), auquel doit être transmis le flux reçu. Cette présélection fournit K' chemins LSP équivalents et alternatifs au chemin LSP initialement prévu et comportant au moins un lien congestionné.

Par exemple, le chemin LSP initial passe par le routeur source LER1, le routeur LCR1, le routeur LCR5 et le routeur de destination LER3, et le lien entre les routeurs LCR1 et LCR5 est congestionné.

Puis, la répartition dynamique de charge se poursuit par la sélection, parmi les K' chemins LSP présélectionnés, d'un jeu de L chemins LSP équivalents $P_l$ et alternatifs au chemin LSP initial congestionné.

Cette sélection se fait en fonction des classements (et donc des valeurs de coût $M_l$) des chemins présélectionnés. Par exemple, le module de calcul CM2 décide de sélectionner les trois (l = 1 à 3) meilleurs chemins $P_1$ à $P_3$, dont les valeurs de coût sont respectivement $M_1$ = 80, $M_2$ = 60 et $M_3$ = 30.

Par exemple, le chemin LSP $P_1$ passe par le routeur source LER1, le routeur LCR1, le routeur LCR4, le routeur LCR5 et le routeur de destination LER3, le chemin LSP $P_2$ passe par le routeur source LER1, le routeur LCR1, le routeur LCR3, le routeur LCR6 et le routeur de destination LER3, et le chemin LSP $P_3$ passe par le routeur source LER1, le routeur LCR2, le routeur LCR3, le routeur LCR5 et le routeur de destination LER3.

Le module de calcul CM2 détermine ensuite la proportion $Q_l$ du trafic qui peut être affectée à chaque chemin LSP sélectionné $P_l$, compte tenu de sa valeur de coût $M_l$. $Q_l$ est définie par la relation suivante :

$$Q_l = \frac{M_l}{\sum_l M_l}$$

Dans l'exemple précité, dans lequel trois chemins LSP sont sélectionnés, le chemin LSP $P_1$ se voit affecter $Q_1$ = 47% du trafic, le chemin LSP $P_2$ se voit affecter $Q_2$ = 35% du trafic, et le chemin LSP $P_3$ se voit affecter $Q_3$ = 18% du trafic.

Puis, le module de calcul CM2 déduit des proportions d'affectation de trafic $Q_l$ des coefficients dits multicoûts $C_l$ qui caractérisent pour le chemin sélectionné $P_l$ le facteur par lequel le nombre de cases de valeurs (ou « value bins ») unitaires attribuées au chemin sélectionné le moins bon $P_L$ (ici $P_L$ = $P_3$) doit être multiplié pour connaître le nombre de bins qui lui sont réservés (ici $P_1$ ou $P_2$). $C_l$ est donné par la formule suivante :

$$C_l = \frac{Q_l}{Q_L}$$

Dans l'exemple précité, dans lequel trois chemins LSP sont sélectionnés, si l'on fixe $C_3$ égal à 1 pour le chemin LSP le moins bon $P_3$, alors $C_1$ est égal à 2,66 pour le chemin LSP $P_1$ et $C_2$ est égal à 2 pour le chemin LSP $P_2$.

Le module de calcul CM2 alimente en proportions d'affectation de trafic $Q_l$ et en coefficients multicoûts $C_l$ un module de distribution DM2 que comporte le second module de traitement PM2.

Le module de distribution DM2, situé dans le routeur LER source, est chargé de distribuer les paquets de données des flux du trafic reçus et devant être transférés vers le routeur LER de destination concerné.

Pour ce faire, il définit ce que l'homme de l'art appelle des classes d'équivalence de transmission (ou FEC pour « Forwarding Equivalence Class ») en nombre égal au nombre L de chemins LSP $P_l$ sélectionnés.

Il est rappelé que dans un réseau à commutation d'étiquettes un flux est identifié par une FEC, qui conduit toutes les données de ce flux sur un même chemin LSP unique. L'association d'un flux à commuter à une FEC est effectuée par le routeur LER source.

Ainsi, la $FEC_l$ correspond au chemin LSP $P_l$ sélectionné, lequel doit transporter QI % du flux reçu, à transférer.

On peut noter que si une FEC donnée est affectée à un flot donné, alors elle correspond à un unique LSP donné. Mais, plusieurs FECs différentes peuvent orienter vers un même LSP. Par conséquent, pour permettre au « load balancing » de répartir les flots d'un LSP initial vers plusieurs autres LSPs (LSP1 à LSPn), il convient de créer le même nombre de FECs ($FEC_1$ à $FEC_n$).

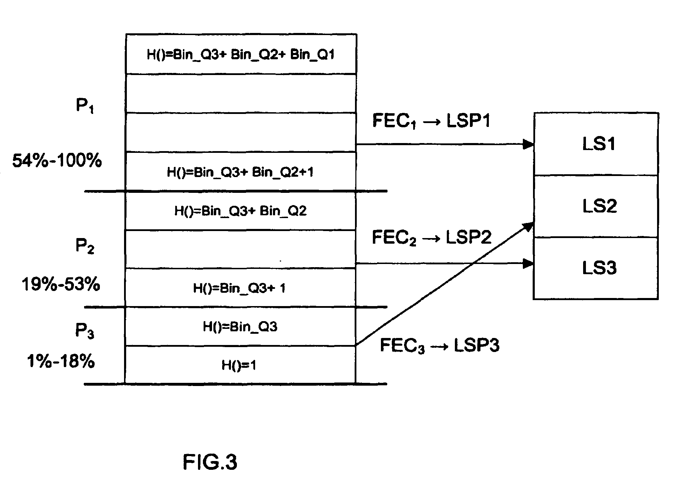

Le module de distribution DM2 effectue ensuite préférentiellement un hachage dynamique de manière à distribuer (ou répartir) de façon inégale les flux de données reçus par son routeur LER source, comme illustré sur la figure 3.

La répartition du trafic dans MPLS est naturellement de type « flux » (ou « flow-based »). En outre, les interruptions de flux peuvent être minimisées au moyen d'un schéma de hachage d'identifiants de flux dynamique.

Les flux de données sont représentés par des multiplets comportant l'identifiant du protocole, les ports MPLS source et destination, et les adresses IP source et destination, ainsi que d'autres caractéristiques par exemple liées à la qualité de service (QoS).

Une fonction de hachage H() est appliquée aux différents identifiants de flux afin de délivrer un nombre choisi de cases de valeurs (ou « value bins ») Bin_q, par exemple q = 1 à 100, de sorte que chaque case corresponde à 1 % des flots à répartir. Puis, le module de distribution DM2 affecte ces cases de valeurs (Bin_q), représentatives des flux de données reçus, aux L chemins LSP $P_l$ sélectionnés, en fonction des proportions de trafic $Q_l$ associées, précédemment déterminées.

Par exemple, et comme illustré sur la figure 3, l'affectation des flux de données peut se dérouler comme suit.

Par exemple, $FEC_3$ est affectée aux flux F tels que H(F) appartient à l'intervalle [0, Bin_$Q_3$=18%] qui

correspond aux Bin_1 à Bin_18, $FEC_2$ est affectée aux flux F tels que H(F) appartient à l'intervalle [Bin_$Q_3$, Bin_$Q_3$+Bin_$Q_2$=53%] qui correspond aux Bin_19 à Bin_53, et $FEC_1$ est affectée aux flux F tels que H(F) appartient à l'intervalle [Bin_$Q_3$+Bin_$Q_2$, Bin_$Q_3$+Bin_$Q_2$+Bin_$Q_1$=100%] qui correspond aux Bin_54 à Bin_100.

Sur la figure 3, les acronymes LS1 à LS3 désignent les trois liens sortants utilisés. Il ne s'agit que d'un exemple illustratif, le nombre de liens sortants pouvant en effet être inférieur ou égal au nombre de $FEC_j$.

Cette affectation représente l'objectif que doit atteindre le module de distribution DM2 dans un intervalle de temps donné et au moyen d'un décalage de flux de données incrémental du chemin LSP initial (comportant le lien critique) vers les différents chemins LSP $P_l$ sélectionnés. Le module de distribution DM2 interrompt préférentiellement le décalage de flux de données vers un chemin LSP sélectionné $P_l$ lorsque la proportion cible du trafic Q qui lui a été affectée est atteinte.

Afin d'éviter les oscillations de trafic, le module de distribution DM2 décale préférentiellement le trafic de façon progressive d'un chemin LSP sélectionné à l'autre en fonction d'un rythme de décalage (ou « pace shifting ») choisi et/ou d'une vitesse de décalage choisie. Par exemple, le rythme de décalage peut être finement accordé au moyen de mécanismes du type de ceux utilisés dans l'algorithme OSPF-OMP (définissant par exemple la quantité élémentaire de flux à décaler en même temps et le nombre de quantités et de règles pour décider quand le rythme de décalage doit être ajusté).

Par ailleurs, le module de distribution DM2 peut être agencé de manière à mettre en oeuvre un mécanisme de stabilisation (ou de seuillage d'hystérésis) destiné à répartir le flux affecté à un chemin LSP sélectionné lorsque sa charge excède un seuil choisi (par exemple égal à 50%), et à interrompre cette répartition lorsque sa charge est inférieure ou égale audit seuil minoré d'un autre seuil choisi (par exemple égal à 30%).

En outre, après avoir procédé à une répartition de charge (ou trafic), le second module de traitement PM2 met préférentiellement à jour la base de données DB et la table de routage qui est stockée dans une mémoire dédiée de son routeur LER source.

Le fonctionnement d'un dispositif D en mode préventif est similaire à celui en mode réactif, décrit ci-avant.

Une première différence provient du mode de déclenchement du module de gestion MM du premier module de traitement PM1. Celui-ci est en effet déclenché lorsqu'il reçoit des instructions de l'administrateur du réseau IP MPLS, comme indiqué précédemment.

Une fois déclenché, le module de gestion MM interrompt les temporisateurs qui contrôlent le calcul des chemins LSP réguliers, comme dans le mode réactif.

Puis, le module d'adaptation AM augmente (ou modifie) le poids de l'un au moins des critères utilisés en l'absence de congestion (par exemple le poids $W_{BW}$ du critère de bande passante disponible), conformément aux instructions reçues de l'administrateur du réseau. Le module d'adaptation AM ajuste ensuite les poids respectifs $w_q$ (q ± WB) des autres critères (réguliers), comme dans le mode réactif.

De préférence, le module d'adaptation AM interroge ensuite la base de données DB afin d'obtenir les informations relatives à la topologie du réseau en cours et aux charges en cours des liens. Il fournit ensuite toutes ces informations au module de calcul CM1 ainsi que les critères et les poids relatifs associés à utiliser.

Le calcul effectué par le module de calcul CM1 est alors identique à celui décrit ci-avant en référence au mode réactif. Par ailleurs, la répartition de charge effectuée par le second module de traitement est quasi-identique à celle décrite ci-avant en référence au mode réactif. La différence peut en effet provenir du fait que le module de calcul CM2 peut être contraint de calculer le rythme et/ou la vitesse de décalage en fonction des instructions reçues de l'administrateur du réseau IP MPLS.

Les dispositifs de répartition de charge D, et notamment leurs premier PM1 et second PM2 modules de traitement, peuvent être réalisés sous la forme de circuits électroniques, de modules logiciels (ou informatiques), ou d'une combinaison de circuits et de logiciels.

L'invention offre des dispositifs de répartition de charge distribués dans chaque routeur périphérique LER, permettant ainsi un traitement des congestions dynamique et rapide.

Par ailleurs, l'invention est adaptée aussi bien aux congestions de longue durée (de l'ordre de l'heure) qu'aux congestions de courte durée (de l'ordre de la minute).

En outre, les chemins LSP alternatifs étant calculés lorsque le dispositif est déclenché, ils sont donc déterminés en fonction d'informations du réseau mises à jour, ce qui garantit l'exclusion des chemins LSP comportant des liens congestionnés.

De plus, l'invention permet d'accroître la robustesse et la stabilité du fait que la répartition de trafic demeure inchangée tout au long de chaque chemin LSP alternatif.

L'invention ne se limite pas aux modes de réalisation de dispositif de répartition de charge et de routeur périphérique à commutation d'étiquettes décrits ci-avant, seulement à titre d'exemple, mais elle englobe toutes les variantes que pourra envisager l'homme de l'art dans le cadre des revendications ci-après.

**Revendications**

**1.** Dispositif de répartition de charge (D) pour un réseau de communications à commutation d'étiquettes comportant un ensemble de noeuds périphériques de commutation d'étiquettes (LER), comportant i) des premiers moyens de traitement (PM1) agencés pour déterminer des chemins équivalents de commutation de flux de données étiquetés entre un noeud périphérique dit source (LER$_S$) et chaque noeud périphérique dit de destination (LER$_D$) dudit ensemble, **caractérisé en ce que** lesdits chemins sont déterminés compte tenu d'une multiplicité de critères associés à des poids respectifs et d'une désignation de chaque lien critique au sein dudit réseau, lesdits chemins de commutation étant classés en fonction de valeurs de coût associées, et et que le dispositif comporte ii) des second moyens de traitement (PM2) agencés pour sélectionner parmi lesdits chemins de commutation déterminés par les premiers moyens de traitement (PM1), un jeu de chemins de commutation équivalents et alternatifs à un chemin de commutation initial, établi entre un noeud périphérique source (LER$_S$) et un noeud périphérique de destination (LER$_D$) et comportant un lien critique, puis pour déterminer une répartition entre les chemins de commutation équivalents et alternatifs dudit jeu, en fonction de leurs valeurs de coût respectives, d'un trafic devant emprunter ledit chemin de commutation initial.

2. Dispositif selon la revendication 1, **caractérisé en ce que** ledit critère est choisi dans un groupe comprenant au moins la bande passante disponible, le nombre de sauts, le temps de transfert et le coût administratif.

3. Dispositif selon l'une des revendications 1 et 2, **caractérisé en ce que** lesdits premiers moyens de traitement (PM1) sont agencés pour déterminer lesdits chemins de commutation à réception d'instructions du réseau comportant lesdits critères, et les poids associés, et lesdites désignations de lien critique.

4. Dispositif selon l'une des revendications 1 à 3, **caractérisé en ce que** lesdits premiers moyens de traitement (PM1) sont agencés pour déterminer lesdits chemins de commutation en cas de réception d'informations désignant au moins un lien critique au sein dudit réseau.

5. Dispositif selon la revendication 4, **caractérisé en ce qu'**il comprend des moyens de détection (DM1) agencés pour détecter des liens critiques congestionnés et fournir auxdits premiers moyens de traitement (PM1) des informations désignant l'un au moins des liens critiques congestionnés détectés.

6. Dispositif selon l'une des revendications 4 et 5, **caractérisé en ce que** lesdits premiers moyens de traitement (PM1) sont agencés pour déterminer lesdits chemins de commutation après avoir modifiés les poids associés auxdits critères.

7. Dispositif selon la combinaison des revendications 2 et 6, **caractérisé en ce que** lesdits premiers moyens de traitement (PM1) sont agencés pour augmenter le poids associé au critère de bande passante, puis ajuster les poids des autres critères en fonction de ladite augmentation, de sorte que la somme des poids des critères utilisés soit égale à 1 et que les proportions entre lesdits poids soient respectées.

8. Dispositif selon l'une des revendications 3 à 7, **caractérisé en ce que** lesdits premiers moyens de traitement (PM1) sont agencés pour déterminer lesdits chemins de commutation à partir de valeurs mises à jour des bandes passantes des liens et de la topologie en cours du réseau.

9. Dispositif selon l'une des revendications 1 à 8, **caractérisé en ce que** lesdits seconds moyens de traitement (PM2) sont agencés i) pour soumettre à un hachage dynamique les flux de données, reçus par le noeud périphérique source et définis par des paramètres de source réseau, de destination réseau, de port source et de port de destination, de manière à délivrer un nombre choisi de cases de valeurs, ii) puis pour affecter lesdites cases de valeurs, représentatives desdits flux de données reçus, auxdits chemins équivalents de commutation dudit jeu en fonction de leurs valeurs de coût respectives.

10. Dispositif selon la revendication 9, **caractérisé en ce que** lesdits seconds moyens de traitement (PM2) sont agencés pour affecter lesdits flux de données reçus, dans un intervalle de temps choisi et selon un décalage de flux incrémental, à chacun des chemins de commutation équivalents et alternatifs dudit jeu, ledit décalage de flux sur l'un desdits chemins étant interrompu lorsque la répartition de trafic associée, fonction de sa valeur de coût, a été atteinte.

11. Dispositif selon la revendication 10, **caractérisé en ce que** lesdits seconds moyens de traitement (PM2) sont agencés pour procéder audit décalage de flux de façon progressive en fonction d'un rythme de décalage choisi et/ou d'une vitesse de décalage choisie.

12. Dispositif selon l'une des revendications 1 à 11, **caractérisé en ce que** lesdits seconds moyens de traitement (PM2) sont agencés pour mettre à jour une table de routage d'un noeud périphérique source (LER$_S$) après avoir déterminé les chemins de commutation équivalents et alternatifs dudit jeu et ladite répartition de trafic.

13. Dispositif selon l'une des revendications 1 à 12, **caractérisé en ce que** lesdits premiers (PM1) et seconds (PM2) moyens de traitement sont interfacés à un protocole de routage à état de lien à extension de type « TE », et en particulier de type « OSPF-TE ».

**14.** Equipement périphérique de réseau (LER), définissant un noeud périphérique pour un réseau de communications à commutation d'étiquettes (N), **caractérisé en ce qu'**il comprend un dispositif de répartition de charge (D) selon l'une des revendications 1 à 13.

**15.** Equipement périphérique selon la revendication 14, **caractérisé en ce qu'**il constitue un routeur périphérique de commutation d'étiquettes.

**Claims**

**1.** Load balancing device (D) for a label switched communication network comprising a set of edge label switched nodes (LER), comprising i) first processing means (PM1) for determining the equivalent label switched dataflow paths between a source edge node (LER$_S$) and each edge destination node (LER$_D$) of said assembly, **characterized in that** the paths are selected taking account of a multiple number of criteria associated with corresponding weights and a designation of each critical link within said network, said switched paths being classified as a function of the associated cost values, and **characterised in that** it comprises ii) second processing means (PM2) designed to select a set of equivalent switched paths alternate to an initial switched path among said switched paths determined by the first processing means (PM1), wherein said initial switched path is set up between a source edge node (LER$_S$) and a destination edge node (LER$_D$) and comprises a critical link, and then determining a distribution between the equivalent and alternate switched paths in said set, as a function of their corresponding cost values, for traffic intended to use said initial switched path.

**2.** Device according to claim 1, **characterised in that** said criterion is chosen from a group comprising at least the available passband, the number of hops, the transfer time and the administration cost.

**3.** Device according to either claim 1 or 2, **characterised in that** said first processing means (PM1) are arranged to determine said switched paths for reception of network instructions comprising said criteria, and the associated weights, and said critical link designations.

**4.** Device according to one of claims 1 to 3, **characterised in that** said first processing means (PM1) are arranged to determine said switched paths for reception of information denoting at least one critical link within said network.

**5.** Device according to claim 4, **characterised in that** it comprises detection means (DM1) designed to detect congested critical links and to provide said first processing means (PM1) with information denoting at least one of the detected congested critical links.

**6.** Device according to either claim 4 and 5, **characterised in that** said first processing means (PM1) are designed to determine said switched paths after having modified weights associated with said criteria.

**7.** Device according to a combination of claims 2 and 6, **characterised in that** said first processing means (PM1) are designed to increase the weight associated with the passband criterion, and then adjust the weight of the other criteria as a function of said increase, such that the amount of the weights of the criteria used is equal to 1 and the proportions between said weights are respected.

**8.** Device according to one of claims 3 to 7, **characterised in that** said first processing means (PM1) are arranged to determine said switched paths from updated values of link passbands and the current topology of the network.

**9.** Device according to one of claims 1 to 8, **characterised in that** second processing means (PM2) may be designed i) such that they submit data flows received by the source edge node and defined by source network, network destination, source port and destination port parameters, to virtual hashing, so as to deliver a chosen number of bins of values, and ii) then to assign bins of values representative of said received data flows, to said equivalent switched paths in said set as a function of their corresponding cost values.

**10.** Device according to claim 9, **characterised in that** said second processing means (PM2) are designed to assign said received data flows during a chosen time interval and according to an incremental flow shift, to each of equivalent and alternate switched paths in said set, said flow shift on one of said paths being interrupted when the associated traffic balancing that depends on its cost value has been reached.

**11.** Device according to claim 10, **characterised in that** said second processing means (PM2) are designed to shift the flow progressively as a function of a chosen pace shifting and / or a chosen shift rate.

**12.** Device according to one of claims 1 to 11, **characterised in that** said second processing means (PM2) are designed to update a routing table of a source edge node (LER$_S$) after determining the equivalent and alternate switched paths of the set and the traffic balancing.

13. Device according to one of claims 1 to 12, **characterised in that** said first (PM1) and second (PM2) processing means are interfaced to a link state routing protocol with a "TE" type extension and particularly the "OSPF-TE" type extension.

14. Edge network equipment (LER) defining a edge node for a label switched communications network (N), **characterised in that** it comprises a load balancing device (D) according to one of claims 1 to 13.

15. Edge equipment according to claim 14, **characterised in that** it forms a edge label switched router.

**Patentansprüche**

1. Vorrichtung zur Lastverteilung (D) in einem etikettenvermittelten Netz, welches eine Gruppe von etikettenvermittelten Peripherieknoten (oder LER) aufweist, umfassend i) erste Verarbeitungsmittel (PM1), dazu angeordnet, gleichwertige Vermittlungspfade für etikettierte Datenflüsse zwischen einem so genannten Quell-Peripherieknoten (LER$_S$) und jedem so genannten Ziel-Peripherieknoten (LER$_D$) der Gruppe zu bestimmen, **dadurch gekennzeichnet, dass** die Pfade bestimmt werden unter Berücksichtigung einer Vielzahl von Kriterien, denen jeweils Gewichtungen zugeordnet sind, und einer Bezeichnung jeder kritischen Verbindung innerhalb des Netzes, wobei die gleichwertigen Vermittlungspfade in Abhängigkeit von zugeordneten Kostenwerten geordnet werden, sowie **dadurch**, dass die Vorrichtung umfasst: ii) zweite Verarbeitungsmittel (PM2), dazu angeordnet, unter den von den ersten Verarbeitungsmitteln (PM1) bestimmten gleichwertigen Vermittlungspfaden einen Satz von Vermittlungspfaden auszuwählen, die gleichwertig und alternativ zu einem anfänglichen Vermittlungspfad sind, der zwischen einem Quell-Peripherieknoten (LER$_S$) und einem Ziel-Peripherieknoten (LER$_D$) aufgebaut wurde und eine kritische Verbindung umfasst, und anschließend eine Verteilung zwischen den gleichwertigen und alternativen Vermittlungspfaden dieses Satzes in Abhängigkeit von ihren jeweiligen Kostenwerten für einen Verkehr zu bestimmen, der dem anfänglichen Vermittlungspfad folgen soll.

2. Vorrichtung nach Anspruch 1, **dadurch gekennzeichnet, dass** das Kriterium aus einer Gruppe gewählt wird, die mindestens die verfügbare Bandbreite, die Anzahl der Teilstrecken, die Übertragungsdauer und/oder die Verwaltungskosten umfasst.

3. Vorrichtung nach einem der Ansprüche 1 und 2, **dadurch gekennzeichnet, dass** die ersten Verarbeitungsmittel (PM1) so angeordnet sind, dass sie die Vermittlungspfade beim Empfang von Anweisungen des Netzes bestimmen, welche die Kriterien und die dazugehörigen Gewichtungen sowie die Bezeichnungen der kritischen Verbindung umfassen.

4. Vorrichtung nach einem der Ansprüche 1 bis 3, **dadurch gekennzeichnet, dass** die ersten Verarbeitungsmittel (PM1) so angeordnet sind, dass sie die Vermittlungspfade im Fall des Empfangs von Informationen bestimmen, die mindestens eine kritische Verbindung innerhalb des Netzes bezeichnen.

5. Vorrichtung nach Anspruch 4, **dadurch gekennzeichnet, dass** sie Erkennungsmittel (DM1) umfasst, die so angeordnet sind, dass sie die von einem Stau betroffenen kritischen Verbindungen erkennen und an die ersten Verarbeitungsmittel (PM1) Informationen liefern, die die mindestens eine der erkannten, von einem Stau betroffenen kritischen Verbindungen bezeichnen.

6. Vorrichtung nach einem der Ansprüche 4 und 5, **dadurch gekennzeichnet, dass** die ersten Verarbeitungsmittel (PM1) so angeordnet sind, dass sie die Vermittlungspfade bestimmen, nachdem sie die den Kriterien zugeordneten Gewichtungen geändert haben.

7. Vorrichtung nach der Kombination der Ansprüche 2 und 6, **dadurch gekennzeichnet, dass** die ersten Verarbeitungsmittel (PM1) so angeordnet sind, dass sie die dem Kriterium der Bandbreite zugeordnete Gewichtung erhöhen und anschließend die Gewichtungen der anderen Kriterien in Abhängigkeit von dieser Erhöhung so anpassen, dass die Summe der Gewichtungen der verwendeten Kriterien gleich 1 ist und dass die Verhältnisse zwischen den Gewichtungen eingehalten werden.

8. Vorrichtung nach einem der Ansprüche 3 bis 7, **dadurch gekennzeichnet, dass** die ersten Verarbeitungsmittel (PM1) so angeordnet sind, dass sie Vermittlungspfade ausgehend von aktualisierten Werten der Bandbreiten der Verbindungen und von der aktuellen Topologie des Netzes bestimmen.

9. Vorrichtung nach einem der Ansprüche 1 bis 8, **dadurch gekennzeichnet, dass** die zweiten Verarbeitungsmittel (PM2) so angeordnet sind, um i) die vom Quell-Peripherieknoten empfangenen und durch Parameter des Quellnetzes, des Zielnetzes, des Quellanschlusses und des Zielanschlusses definierten Datenflüsse einer dynamischen Zerhackerfunktion unterwerfen, um eine gewählte Anzahl von Werteintervailbereichen zu liefern, und um ii) die Werteintervallbereiche, die für die empfangenen Datenflüsse repräsentativ sind, den gleichwertigen Vermittlungspfaden des Satzes in Abhängigkeit von ihren jeweiligen Kostenwerten zuzuordnen.

**10.** Vorrichtung nach Anspruch 9, **dadurch gekennzeichnet, dass** die zweiten Verarbeitungsmittel (PM2) so angeordnet sind, dass sie die empfangenen Datenflüsse während eines gewählten Zeitintervalls und entsprechend einer inkrementellen Flussverschiebung jedem der gleichwertigen und alternativen Vermittlungspfade des Satzes zuweisen, wobei die Flussverschiebung auf einem der Pfade unterbrochen wird, wenn die zugehörige Verkehrsverteilung in Abhängigkeit von ihrem Kostenwert erreicht ist.

**11.** Vorrichtung nach Anspruch 10, **dadurch gekennzeichnet, dass** die zweiten Verarbeitungsmittel (PM2) so angeordnet sind, dass sie die Flussverschiebung fortschreitend in Abhängigkeit vom gewählten Verschiebungstakt und/oder von einer gewählten Verschiebungsgeschwindigkeit vornehmen.

**12.** Vorrichtung nach einem der Ansprüche 1 bis 11, **dadurch gekennzeichnet, dass** die zweiten Verarbeitungsmittel (PM2) so angeordnet sind, dass sie eine Routingtabelle eines Quell-Peripherieknotens ($LER_S$) aktualisieren, nachdem sie die gleichwertigen und alternativen Vermittlungspfade des Satzes und die Verkehrsverteilung bestimmt haben.

**13.** Vorrichtung nach einem der Ansprüche 1 bis 12, **dadurch gekennzeichnet, dass** die ersten (PM1) und die zweiten (PM2) Verarbeitungsmittel über eine Schnittstelle zu einem Routingprotokoll mit erweiterter Berücksichtigung des Verbindungsstatus des Typs "TE" und insbesondere des Typs "OSPF-TE" verfügen.

**14.** Peripheriegerät des Netzes (LER), welches einen Peripherieknoten für ein etikettenvermitteltes Kommunikationsnetz (N) definiert, **dadurch gekennzeichnet, dass** es eine Lastverteilungsvorrichtung (D) nach einem der Ansprüche 1 bis 13 umfasst.

**15.** Peripheriegerät nach Anspruch 14, **dadurch gekennzeichnet, dass** es einen etikettenvermittelten Peripherierouter ["Label Edge Router"] darstellt.

FIG.1

FIG.2

FIG.3

## RÉFÉRENCES CITÉES DANS LA DESCRIPTION

**Documents brevets cités dans la description**

- FR 0215966

**Littérature non-brevet citée dans la description**

- **ORINCSAY et al.** Computer Networks. Elsevier Science Publishers B.V, vol. 43, 557-572